# EUROPEAN PATENT APPLICATION

(11) **EP 3 677 462 A1**
(43) Date of publication of application: **08.07.2020**
(21) Application number: 19219499.1
(22) Date of filing: 23.12.2019
(51) Int. Cl.: B60K 6/12, F16H 61/4096

(54) **HPOWERSHIFT DRIVELINE**

(30) Priority: 05.01.2019 GB 201900143
(71) Applicant: AGCO International GmbH, 8212 Neuhausen am Rheinfall (CH)
(72) Inventor: Viitasalo, Ville, 40250 Jyvaskyla (FI); Kivela, Raine, 40250 Jyvaskyla (FI)
(74) Representative: AGCO Intellectual Property Department

(57) **Abstract**

There is described a driveline for a tractor comprising: a transmission; a differential; a driveshaft configured to transfer torque from the transmission to the differential; and an auxiliary drive system. The auxiliary drive system comprising a hydraulic motor and a hydraulic pressure storage device. The hydraulic motor being powered by the hydraulic pressure storage device and is configured to apply torque to the driveshaft.

## Description

### FIELD OF THE INVENTION

The present invention relates to the prevention of torque interruption during gear shifting in a driveline. In particular, to maintaining constant power delivery to the driving wheels of a working vehicle, for example maintaining drive to a tractor's wheels, during a gear change whilst the driveline is under load, for example, whilst a tractor is pulling an implement.

### TECHNICAL BACKGROUND

It is well known that in some types of transmission, torque output from the transmission during a gear change is momentarily lost.

In certain applications this is highly undesirable, for instance when a vehicle such as a tractor is towing an implement for example a plough or a heavily loaded trailer and an operator wishes to change up a gear ratio, the high resistance to motion of the vehicle which is afforded by the drag of a plough or trailer may cause the forward motion of said vehicle to stall.

Double clutch transmissions and clutch to clutch shifting capable transmissions have been developed such that torque output from a transmission during gear change is uninterrupted. However, these types of transmissions are expensive, high component numbers increase complexity and frictional losses and they often require increased levels of maintenance over transmissions that are not capable of delivering uninterrupted torque during gear change.

It is desirable to use transmissions that are not capable of delivering uninterrupted torque during gear change in working vehicles to reduce production costs and overall driveline complexity.

The aim of the present invention is to provide an additional system that can be used in conjunction with transmissions that are not capable of delivering uninterrupted torque during gear change, to provide uninterrupted torque and continuous power delivery to the wheels of a vehicle.

### SUMMARY OF THE INVENTION

Accordingly, there is provided a driveline for a tractor comprising: a transmission; a differential; a driveshaft configured to transfer torque from the transmission to the differential; and an auxiliary drive system, the auxiliary drive system comprising a hydraulic motor and a hydraulic pressure storage device, wherein the hydraulic motor is powered by the hydraulic pressure storage device and is configured to apply torque to the driveshaft.

The provision of the auxiliary drive system provides a secondary source of torque for the driveshaft in addition to that provided from the transmission.

Advantageously, the hydraulic motor may be configured to apply torque to the drive shaft during the shifting between gear ratios in the transmission such that the drive shaft has a constant and/or continuos torque level applied to it.

As the auxiliary drive system applies torque to the driveshaft when the transmission is in between gear ratios, the driveshaft and thus for example the wheels of the tractor are provided with uninterrupted drive during gear changes.

Advantageously, the hydraulic motor may be configured to apply torque to the drive shaft only during the shifting between gear ratios in the transmission such that the drive shaft has a constant/continuous torque applied to it.

As the auxiliary drive system applies torque to the driveshaft only when the transmission is in between gear ratios, the driveshaft and thus for example the wheels of the tractor are provided with uninterrupted drive during gear changes only, the auxiliary drive system is required less often and thus is exposed to reduced work and therefore, wear, thereby increasing the system life.

Advantageously, the hydraulic motor may be configured to apply torque to the drive shaft in addition to a torque being applied to the drive shaft by the transmission such that the drive shaft has torque applied to it by two sources.

This means the peak torque applied to the driveshaft can be increased and/or a lower torque output prime mover may be used in a vehicle whilst still being able to deliver a higher peak torque at the wheels.

Advantageously, the driveshaft may be configured to drive the hydraulic motor such that the hydraulic motor generates hydraulic pressure to repressurise the hydraulic pressure storage device.

Utilising the hydraulic motor as a hydraulic pump eliminates the requirement for a separate pressurising system for the hydraulic pressure storage device thereby reducing system complexity.

Advantageously, the hydraulic pressure storage means may be an accumulator.

An accumulator can be charged quickly thus the auxiliary drive system can be readied for use more quickly.

Advantageously, the transmission and differential may be a transaxle.

Combining the transmission and differential into a single housing device such as that of a transaxle removes the requirement for two housings and thus reduces the system weight.

### DETAILED DESCRIPTION OF THE INVENTION

Embodiments of the invention will now be described, by way of example only, with reference to the accompanying drawings, in which:

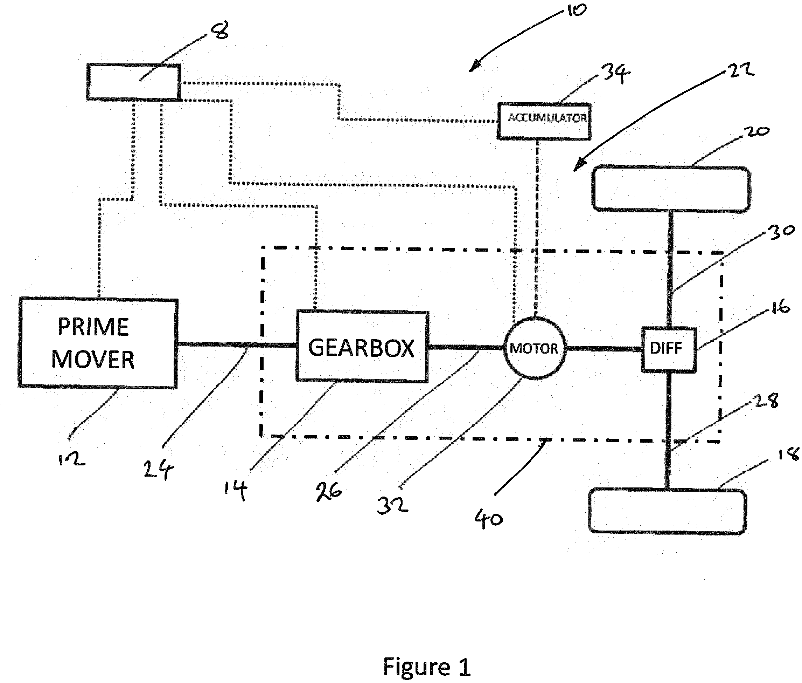

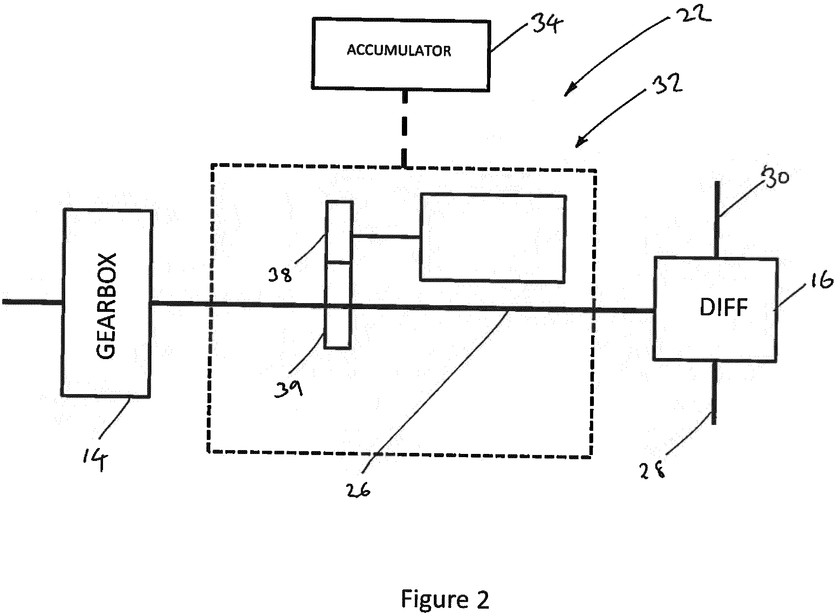

Fig. 1 is a schematic of a driveline including an auxiliary drive system according to the present invention;
Fig . 2 is a schematic of a portion of the driveline of figure 1, showing the hydraulic motor of the auxiliary driveline in more detail.

The drawings are provided by way of reference only, and will be acknowledged as not to scale.

With reference to Fig. 1, there is shown control unit 8, a driveline 10 for a working vehicle for example a tractor. The driveline comprises a prime mover 12, a transmission 14, a differential 16, left and right ground engaging elements 18, 20 and an auxiliary drive system 22.

The prime mover 12 in this embodiment is a diesel internal combustion engine. In other embodiments the prime mover 12 may be of any suitable type for example a petrol or alternative fuel internal combustion engine.

The prime mover 12 is configured to mechanically drive the transmission 14. This mechanical drive connection is shown schematically in the figures and represented by the input shaft 24. The input shaft 24 is configured to transfer torque that is generated by the prime mover 12 to drive the transmission 14 in a conventional manner. In other embodiments alternative arrangements of the prime mover 12 and the transmission 14 may be utilised for example the prime mover 12 may be directly mounted to the transmission 14.

The transmission 14 is of any suitable type. In this specific embodiment the transmission 14 is a four range four speed mechanical gearbox. It will however be understood that any type of transmission may be used for example a four range six speed mechanical gearbox. The transmission 14 outputs torque and thus drive to the differential 16 via a driveshaft 26.

The differential 16 is driven by the driveshaft 26 which transfers torque from the transmission 14 to the differential 16. The differential 16 receives torque from the transmission 14 and drives the left and right axle shafts 28, 30.

The left and right axle shafts 28, 30 drive the left and right ground engaging elements 18, 20 respectively. In this embodiment the left and right ground engaging elements 28, 30 are wheels. In other embodiments it will be understood that the left and right ground engaging elements 28, 30 may be for instance endless tracks.

In other examples, there may be a hub reduction gear between the left and right axle shafts 28, 30 and the respective left and right ground engaging elements 18, 20. This hub reduction gear, also known as a final drive reduction or simply final drive, provides a further reduction in gear ratio.

In this particular embodiment, the auxiliary drive system 22 comprises a hydraulic motor 32 and a hydraulic pressure store 34.

The hydraulic motor 32 is in this specific example is a gear and vane ydraulic motor, however, it will be understood that any suitable hydraulic motor may be specified for the particular parameters that are required from the system and, for example a different type of hydraulic motor such as a variable vane hydraulic motor may be used.

The hydraulic motor 32 is configured to mechanically drive the driveshaft 26. The hydraulic motor 32 is arranged with the hydraulic motor central shaft parallel to the driveshaft 26. The hydraulic motor 32 is be provided with a gear 38 on the hydraulic motor shaft and the driveshaft 26 has a cooperating gear 39 that is driven by the gear 38 on the hydraulic motor shaft thereby the hydraulic motor 32 can apply torque to the driveshaft 26. Various other arrangements are envisioned whereby the hydraulic motor 32 can apply torque to the driveshaft 32, for example a chain drive or belt drive or even via a gear arrangement such as a small gearbox.

The hydraulic pressure store 34 in this specific example is an accumulator. In particular, the hydraulic pressure store 34 is a high pressure piston accumulator. In other examples any suitable hydraulic energy store may be used. For example, bladder accumulators or diaphragm accumulators may be utilised to store hydraulic pressure, either at relatively high pressures or low pressure or a combination thereof.

The hydraulic pressure store 34 is in hydraulic communication with the hydraulic motor 32 and provides the hydraulic pressure required for the hydraulic motor 32 to operate. Furthermore, the hydraulic motor 32 is configured to repressurise the hydraulic pressure store 34. That is, the hydraulic motor 32 can be operated as a hydraulic pump, to recharge or repressurise the hydraulic energy store 34. The hydraulic motor 32 is reverse driven by the driveshaft 26 and thereby acts as a hydraulic pump when the hydraulic motor is not required to drive the driveshaft 26.

In other embodiments, the transmission 14 and the differential 16 may share a common housing and may be in the form of a transaxle. A common housing is indicated schematically in figure 1 by the broken line 40.

The control unit 8 is in two way data communication with the prime mover 12, the transmission 14 and the auxiliary drive system 22. The control unit 8 sends signals and receives data from various sensors to control when the auxiliary drive system 22 is operational. In this specific example, the control unit 8 is shown as a separate unit which may be provided anywhere on a vehicle and may indeed be the vehicles ECU. In other examples, the control unit 8 may be a standalone unit provided solely for the auxiliary drive system 22 and/or may plug directly in to a vehicle CANBUS.

When in use, the hydraulic motor 32 is used to provide torque to the driveshaft 26 when drive is intermittently lost from the transmission 14 during a gear change.

In more detail, it is known that in non-double clutch transmissions that during a conventional gear change, torque and/or power output from a transmission is intermittently lost. This is because the transmission is moving from a first gear ratio to the next and thus there is no continuous torque path from the prime mover 12 to the driveshaft 14. As such, drive is briefly lost. For highly loaded drivelines this brief loss in drive can be problematic. Take for instance when a tractor is towing an implement for example a plough. When the plough is being used there is a high load placed on the driveline of the tractor as there exists a high resistance to forward motion due to the plough being in contact with the ground. In this situation any loss of drive due to changing gear could cause the tractor's forward progress to stall.

The auxiliary drive system 22 of the present invention fills the torque gap that is created when shifting gears such that torque and/or power that is delivered to the ground engaging elements 18, 20 is uninterrupted.

That is, when the transmission 12 is in between gear ratios, i.e. during gear change/shifting, the hydraulic motor 32 provides torque to the driveshaft 26 to ensure that continuous drive is provided to the ground engaging elements 18, 20.

When the transmission 12 is providing torque to the driveshaft 26 the hydraulic motor 32 performs as a hydraulic pump to repressurise the hydraulic accumulator 34. When the hydraulic energy store 34 is fully or sufficiently pressurised and the hydraulic motor 32 is not required to supply torque to the driveshaft 26, the hydraulic motor 32 may be put into a neutral mode (or freewheeling) wherein the hydraulic motor 32 is neither driving the driveshaft 26 nor acting as a pump. In other embodiments the hydraulic motor 32 may be clutched in relation to the driveshaft 26 such that when not required it can be declutched to reduce efficiency losses due to friction and momentum of the motor 32 componentry or indeed a similar effect may be achieved by positioning vane in the hydraulic motor in a 'neutral' position.

In other embodiments, sizing the torque capability of the hydraulic motor 32 and the capacity of the hydraulic pressure store 34 for the particular application would allow the auxiliary drive system to apply torque to the driveshaft 26 for a prolonged period, i.e. for a greater duration than when drive is lost from the transmission 14 during a gear change or gear changes. This essentially provides a 'soft' hydraulic hybrid drive system for a vehicle.

In addition, in yet further embodiments, the auxiliary drive system 22 may be configured to apply a torque to the driveshaft 26 in addition to the torque provided by the transmission 14 from the prime mover 12. This additional torque increases the peak torque available at the ground engaging elements 18, 20 and can be considered as a torque boost.

Furthermore, it is envisioned that the auxiliary drive system 22 may be provided as a standalone system such that it can be retrofit to existing drivelines.

The invention is not limited to the embodiments or examples described herein, and may be modified or adapted without departing from the scope of the present invention.

## Claims

1. A driveline for a tractor comprising:
a transmission;
a differential;
a driveshaft configured to transfer torque from the transmission to the differential; and
an auxiliary drive system, the auxiliary drive system comprising a hydraulic motor and a hydraulic pressure storage device, wherein the hydraulic motor is powered by the hydraulic pressure storage device and is configured to apply torque to the driveshaft.

2. The driveline according to claim 1, wherein the hydraulic motor is configured to apply torque to the drive shaft during a shift between gear ratios in the transmission such that the drive shaft has a constant torque level applied to it during said shift.

3. The driveline according to claim 1, wherein the hydraulic motor is configured to apply torque to the drive shaft only during a shift between gear ratios in the transmission such that the drive shaft has a constant torque level applied to it during said shift.

4. The driveline according to claim 1, wherein the hydraulic motor is configured to apply torque to the drive shaft in addition to a torque being applied to the drive shaft by the transmission such that the drive shaft has torque level applied to it by two sources.

5. The driveline according to any preceding claim, wherein the driveshaft is configured to drive the hydraulic motor such that the hydraulic motor generates hydraulic pressure to repressurise the hydraulic pressure storage device.

6. The driveline according to any preceding claim, wherein the hydraulic pressure storage means is a hydraulic accumulator.

7. The driveline according to any preceding claim wherein the transmission and differential are part of a transaxle.
